# EUROPEAN PATENT APPLICATION

(11) **EP 1 698 509 A1**
(43) Date of publication of application: **06.09.2006**
(21) Application number: 04818855.1
(22) Date of filing: 09.11.2004
(51) Int. Cl.: B60N 2/14, B60P 1/44, B65G 67/02

(54) **SWING DEVICE**

(30) Priority: 18.11.2003 JP 2003388406; 18.11.2003 JP 2003388407
(71) Applicant: TOYOTA SHATAI KABUSHIKI KAISHA, Kariya-shi, Aichi 448-8666 (JP)
(72) Inventor: TSUJIMOTO, Hisasi, TOYOTA SHATAI K. K., Kariya-shi, Aichi 448-8666 (JP); YASUFUKU, Sigeru, TOYOTA SHATAI K. K., Kariya-shi, Aichi 448-8666 (JP); TSUZUKI, Hideo, TOYOTA SHATAI K. K., Kariya-shi, Aichi 448-8666 (JP); YAMAUCHI, Hidenori, TOYOTA SHATAI K. K., Kariya-shi, Aichi 448-8666 (JP)
(74) Representative: Winter, Brandl, Fürniss, Hübner Röss, Kaiser, Polte Partnerschaft Patent- und Rechtsanwaltskanzlei
(86) International application number: PCT/JP2004/016604
(87) International publication number: WO 2005/049367

(57) **Abstract**

In a swinging apparatus (rotatively moving and swinging apparatus), a swing arm 51 positions a rotatively moving pedestal 45 and a cushion base 51. The swing arm 51 is swung around a driving shaft 60 to swing the cushion base 51, that is, to elevate or lower the cushion base 51 and to move it forward or backward. The cushion base 51 supports a seat portion 30. When the seat is in a forward position in which it is directed toward the front of the vehicle, the swing arm 55 diagonally connects the members 51 and 45 together (Z type). This prevents, in the forward position, the swing arm 55 from extending upward from the cushion base 51 or the rotatively moving pedestal 45 from extending laterally from the seat portion 30. Therefore, the size of the apparatus can be reduced across the width and height.

## Description

The present invention relates to a swinging apparatus.

An elevating and lowering apparatus has been proposed which is installed in an uneven place or in a van type vehicle to perform a loading or unloading operation (for example, Patent Document 1). As shown in Figure 17, the elevating and lowering apparatus is mainly composed of a pallet 1 on which a load can be placed, a base member 2 disposed on a side of the pallet 1, a driving motor 3 provided on the base member 2, and a swinging arm 5 that positions the base member 2 and a suspension arm 1A standing on the pallet 1. The swinging arm 5 can be swung around its connection portion 5A connected to the base member 2 to elevate and lower the load on the pallet 1.

In this structure, the swinging arm 5 is connected to the suspension arm 1A of the pallet 1. Accordingly, even while out of use, the swinging arm 5 extends upward far from the pallet 1. This increases the size of the apparatus even in a vertical direction, thus degrading the aesthetic aspect of the apparatus. This apparatus thus leaves room for improvement.

An elevating and lowering apparatus different from the one disclosed in Patent Document 1 comprises a pivoting support mechanism and an elevating and lowering mechanism (for example, Patent Document 2). The pivoting support mechanism supports a seat so that the seat can be pivoted between a forward position where it is directed in a vehicle advancing direction and a pivoted position where it is directed toward a door opening. The elevating and lowering mechanism elevates and lowers the seat in the pivoted position, outside the vehicle through the door opening. These mechanisms comprise dedicated driving sources (driving motors). A control device switches the driving to allow the mechanisms to perform predetermined operations.

However, the elevating and lowering apparatus disclosed in Patent Document 2 has an increased size because the pivoting support mechanism and the elevating and lowering mechanism have the dedicated driving source. This apparatus thus leaves room for improvement. Patent Document 1: Japanese Utility Model Laid-Open No. 6-67173 Patent Document 2: Japanese Patent Laid-Open No. 2001-47898

A problem to be solved by the present invention is the difficulty in reducing the size of the swinging apparatus.

The present invention is mainly characterized in that a mount is rotativelymoved around a connection portion in a direction opposite to that in which a swing arm be rotatively moved, so as to be held in a horizontal posture even during a swinging operation.

The swinging apparatus in accordance with the present invention is configured so that when a swing arm is in a set position, a mount and a base member are diagonally positioned. This prevents the swing arm from extending upward from the mount. Consequently, the size of the apparatus can be reduced across the height.

Further, according to another embodiment of the present invention, when the swing arm is swung, a movable sprocket rotatively moves in a direction opposite to a swinging direction. This allows the mount to be held in a horizontal posture with respect to the base member regardless of the swinging operation of the swing arm. Further, some such posture holding portions operate via a four-node link, thatis, four supporting points. However, the sprocket operates via two supporting points, and thus has a simple structure and operates smoothly.

According to another embodiment of the present invention, when a driving portion rotatively moves a horizontal rotating shaft, the mount is swung (elevated or lowered and moved forward or backward) via the swing arm. As the horizontal rotating shaft rotates, its rotating operation is directionally converted into a rotating operation around a vertical rotating shaft, with the converted rotating operation transmitted to a rotatively moving portion. This rotatively moves the base member and thus the mount. Thus, both swinging operation and rotatively moving operation can be performed using the same driving source. This makes it possible to reduce the number of parts required and thus the size of the whole apparatus.

Moreover, according to another embodiment of the present invention, a converting portion comprises such a pair of gears as allows the rotating shafts to cross at right angles. The converting portion thus has a simple structure.

Furthermore, according to another embodiment of the present invention, a transmitting portion joins two sprockets together via a belt. Consequently, even if the two sprockets are spaced from each other, their power can be easily transmitted.

Further, according to another embodiment of the present invention, the swing arm is inverted, that is, rotativelymoved through about 180° around the horizontal rotating shaft. This ensures a sufficient stroke for a seat portion when it swings to the exterior or interior of the vehicle (for a swinging angle of 180°, a stroke is ensured which is almost double the length of the swing arm).
Figure 1 is a plan view of a vehicle applied to an embodiment of the present invention.
Figure 2 is a plan view showing a rotatively moving operation of a seat portion.
Figure 3 is a plan view showing a loading and unloading position of the seat portion.
Figure 4 is an exploded perspective view of a rotatively moving and swinging apparatus.
Figure 5 is a side view of the seat portion in a forward position.
Figure 6 is a sectional view of the rotatively moving and swinging apparatus in the forward position.
Figure 7 is a sectional view showing a swinging operation of a swing arm.
Figure 8 is a sectional view showing the swinging operation of the swing arm.
Figure 9 is a sectional view of the rotatively moving and swinging apparatus in the loading and unloading position.
Figure 10 is a plan view of the rotatively moving and swinging apparatus in the forward position.
Figure 11 is a plan view showing a rotatively moving operation of the seat portion.
Figure 12 is a plan view of the rotatively moving and swinging apparatus in the loading and unloading position.
Figure 13 is a sectional view showing the structure of a link mechanism.
Figure 14 is a sectional view showing a support structure for the swing arm.
Figure 15 is a side view showing a swinging operation of the swing arm.
Figure 16 is a plan view showing the structure of the link mechanism.

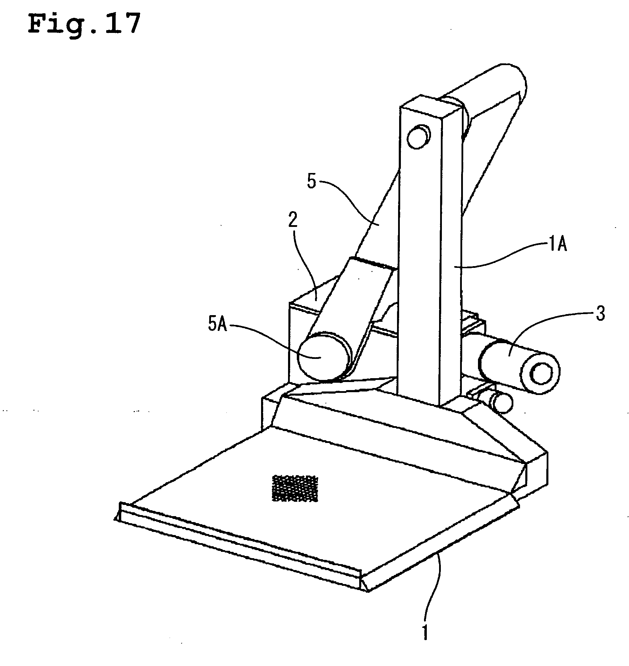

Figure 17 is a perspective view of a conventional example.

- 40: Rotatively moving portion
- 41: Bearing plate
- 45: Rotatively moving pedestal (base member)
- 51: Cushion base (mount)
- 55: Swing arm
- 60: Driving shaft (horizontal rotating shaft)
- 71: Transmitting portion
- 91: Converting portion

### <Embodiment 1>

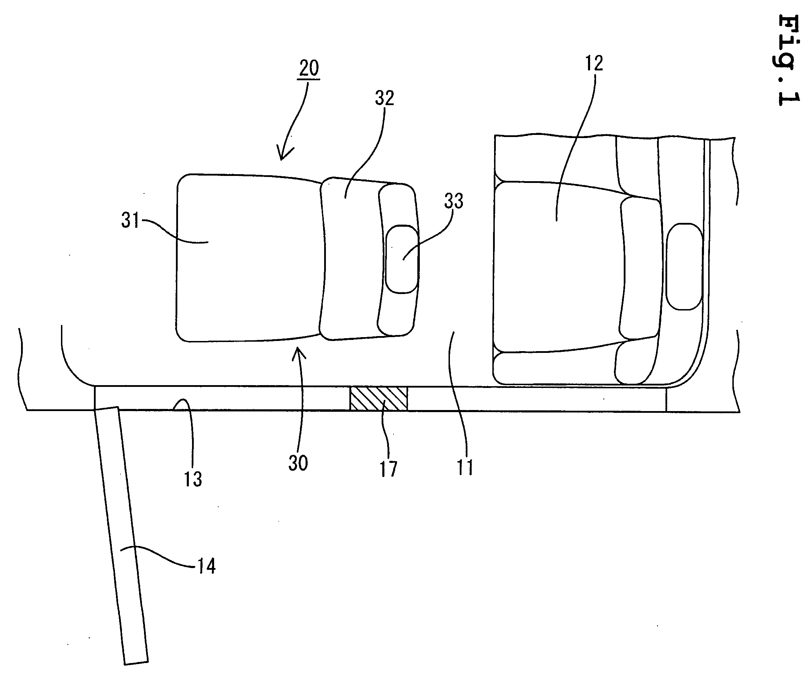

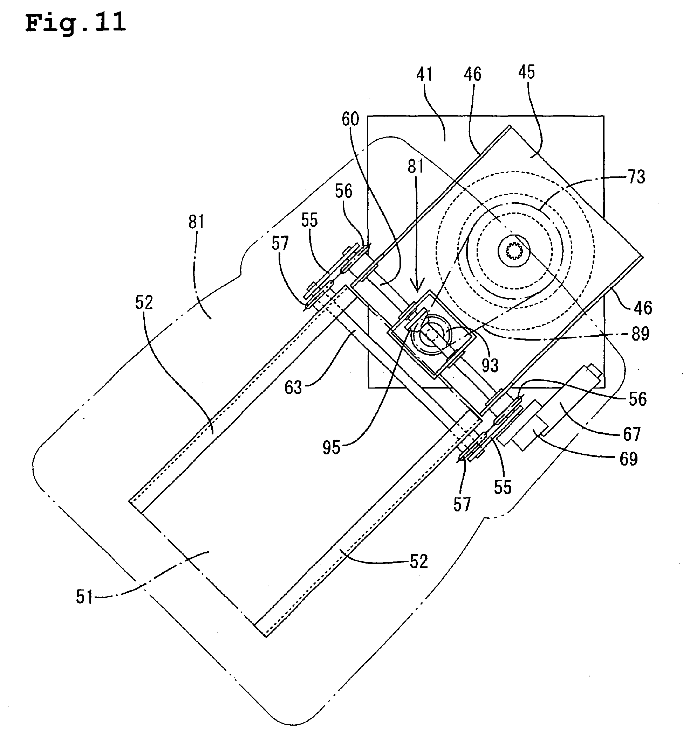

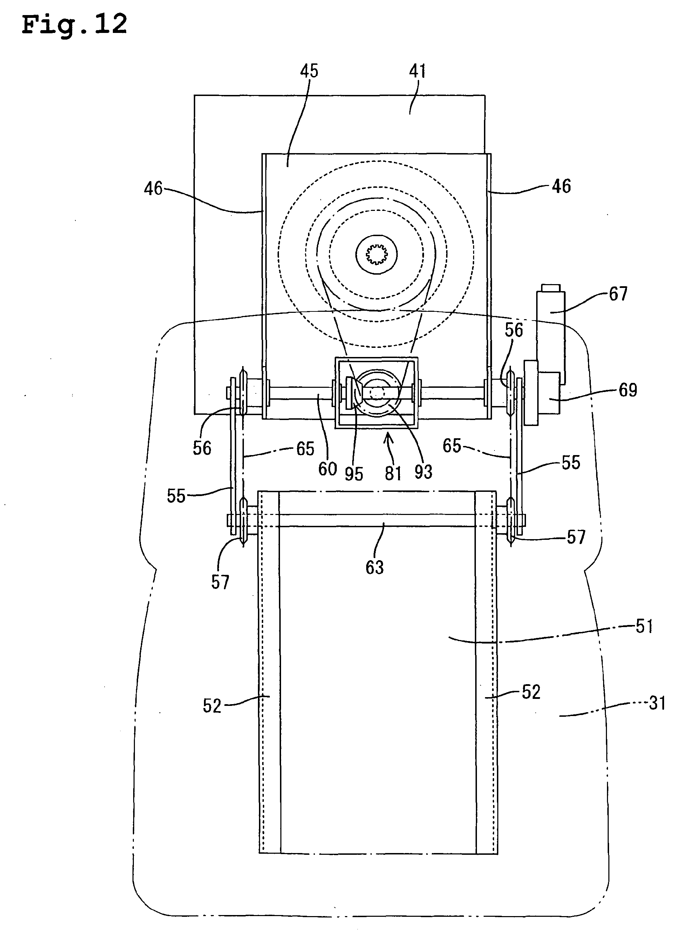

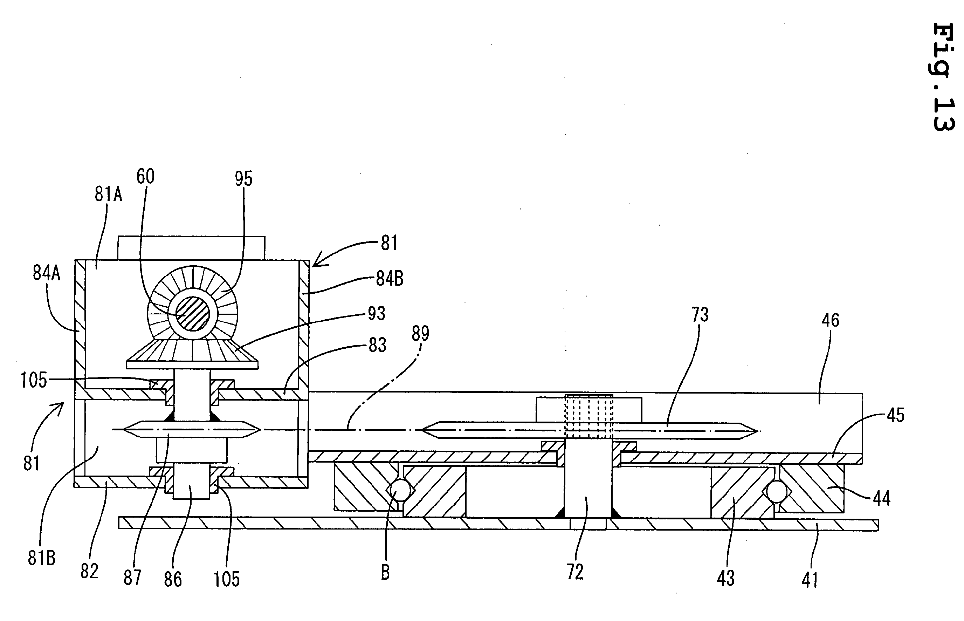

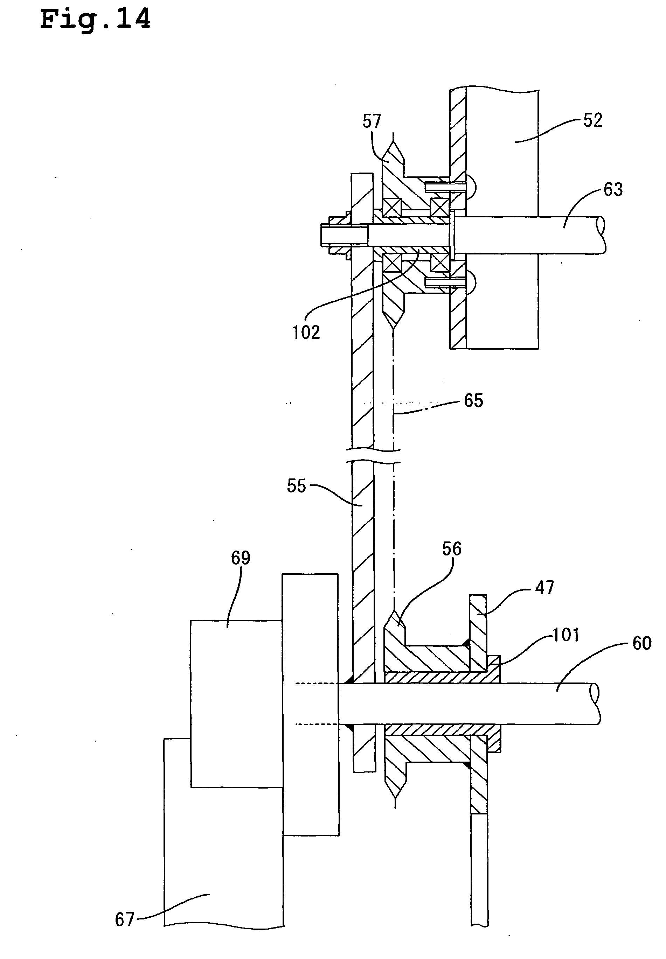

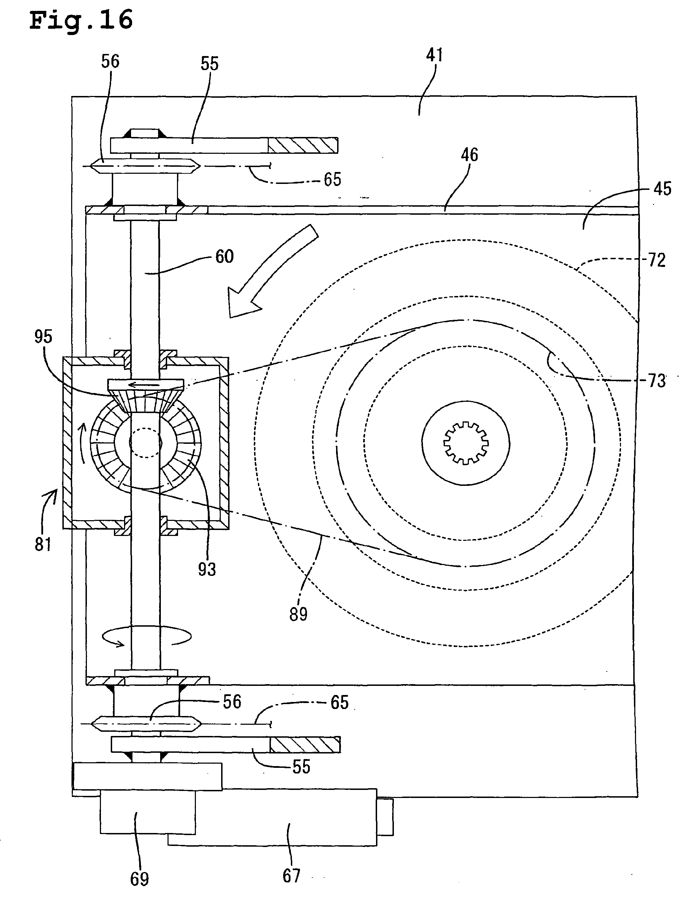

An embodiment of the present invention will be described with reference to Figures 1 to 16.

Figure 1 shows half of a passenger seat in a car applied to the present embodiment. In a compartment, a passenger seat 20 and a rear seat 12 are arranged on a floor panel 11. A door opening 13 is provided on a side of the passenger seat 20. A door 14 is attached to the door opening 13 so that it can be opened and closed. A center pillar 17 is formed behind the door opening 13.

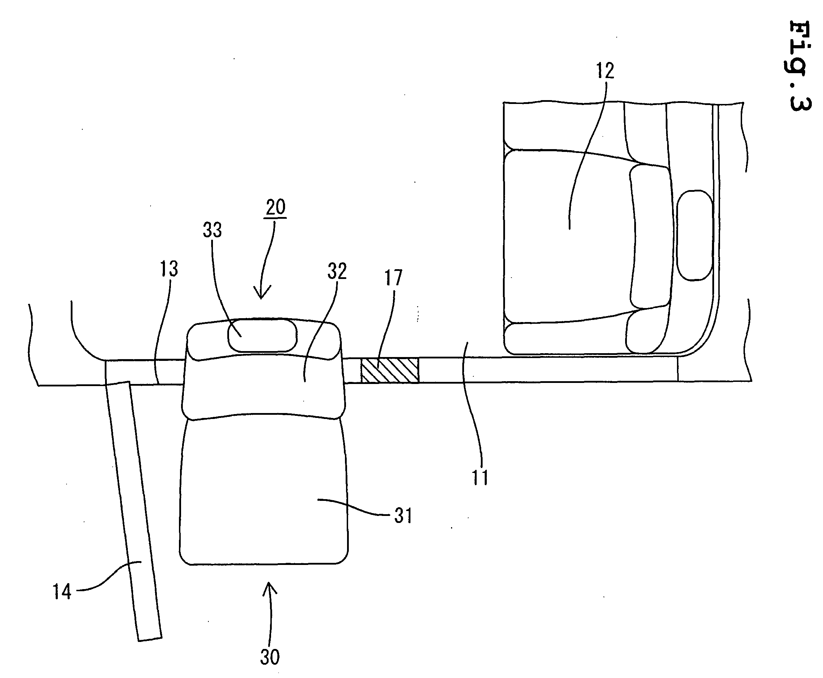

The passenger seat 20 is composed of a seat portion 30 consisting of a seat cushion 31, a seat back 32, and a headrest 33, and a rotatively moving and swinging apparatus M. The apparatus M causes the seat portion 30 to perform an internal slide operation for adjusting the seat position in the compartment and an external projecting operation and retracting operation for allowing a passenger to get in or out smoothly. The projecting and retracting operation causes the seat portion 30 to perform a combination of a rotatively moving operation and a swinging operation to displace the seat portion 30 between a forward position (position shown in Figure 1) where the seat portion 30 is directed in a vehicle advancing direction and a loading and unloading position (position shown in Figure 3) where almost the entire seat portion 30 projects out of the car through the door opening 13. The forward position corresponds to a set position in accordance with the present invention.

The rotatively moving and swinging apparatus M comprises a slide portion 35 that causes the seat portion 30 to perform an internal slide operation, a rotatively moving portion 40 that causes the seat portion 30 to perform a rotatively moving operation, and a swinging portion 50 that causes the seat portion 30 to perform a swinging operation.

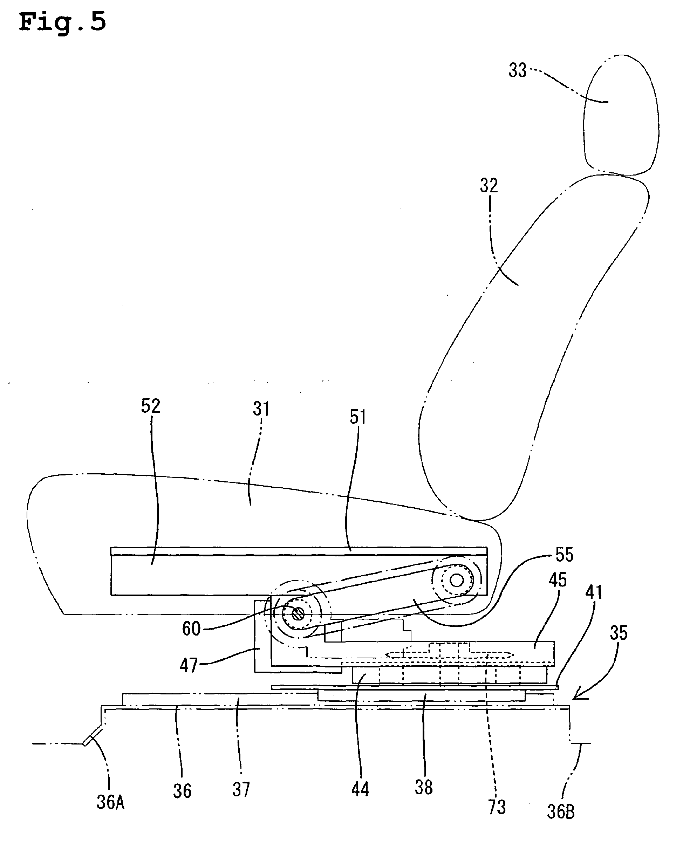

As shown in Figure 5, the slide portion 35 has a generally rectangular support plate 36 and a slide plate 41 disposed above the slide portion 35. The support plate 36 comprises fixed brackets 36A and 36B at its front and rear end, respectively. The support plate 36 is attached to the floor panel 11. A pair of movable and fixed rails 37 and 38 is disposed between the support plate 36 and a bearing plate 41; the movable and fixed rail 37 and 38 can perform a relative slide operation. The pair of the movable and fixed rails 37 and 38 allows the bearing plate 41 and the passenger seat 20 to be supported so as to be able to slide forward and backward in the car body.

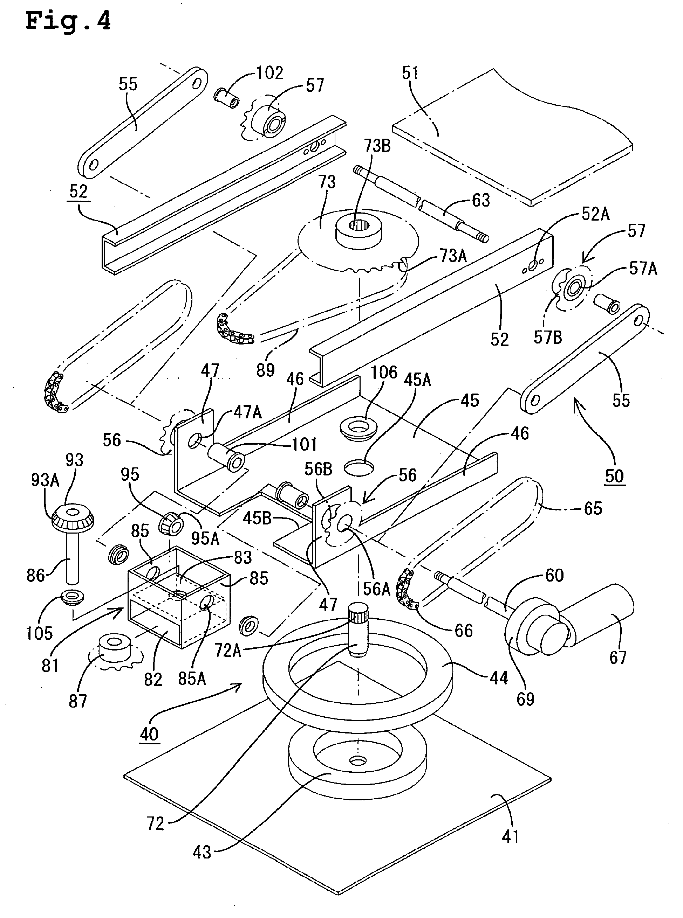

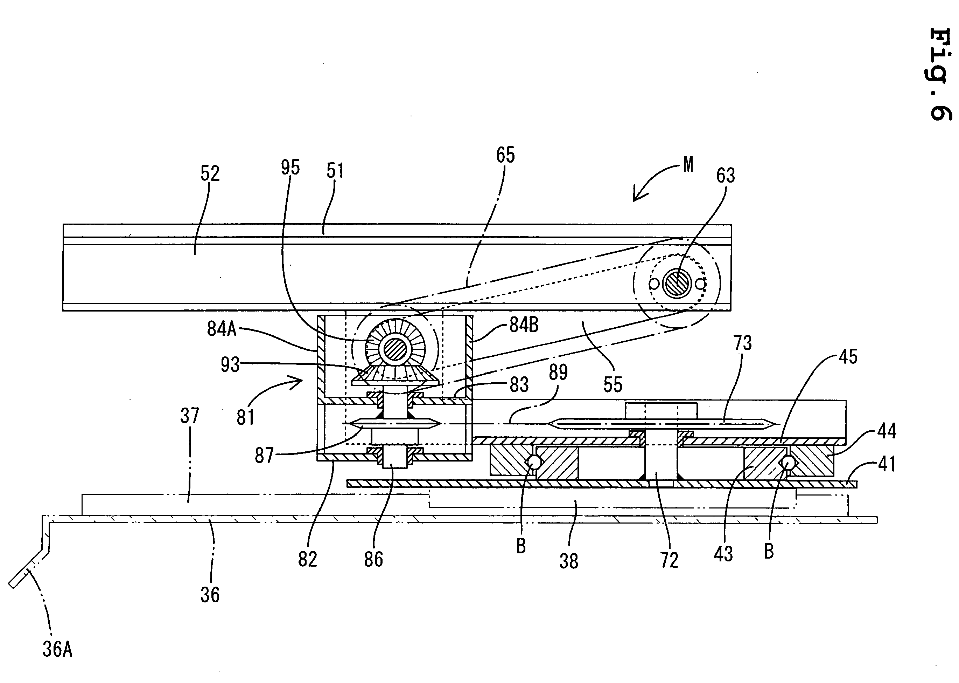

As shown in Figures 4 and 6, the rotatively moving portion 40 comprises a rotatively moving pedestal (corresponding to a base member in accordance with the present invention) 45 above the bearing plate 41 (corresponding to a bearing portion in accordance with the present invention). An outer ring 44 is provided under the rotatively moving pedestal 45. An inner ring 43 is provided over the bearing plate 41. The outer ring 44 is rotatively movably attached to the outer periphery of the inner ring 43 via balls B. The rotatively moving pedestal 45 is thus rotatively movably supported by bearing plate 41.

Further, upward sidewalls 46 are provided at a left and right side edge of the rotatively moving pedestal 45 along its length. The front (hereinafter referred to an attaching wall 47) of each of the sidewalls 46 is extended upward from the remaining part of the sidewall 46. A swing arm 55 described later is installed on the attaching wall 47.

Subsequently, the swinging portion 50 will be described.

Reference numeral 51 shown in Figure 4 denotes a cushion base (corresponding to a mount in accordance with the present invention). The cushion base 51 is planar and the seat cushion 31 is installed on the top surface of the cushion base 51. A lateral pair of connection frames 52 is attached to the bottom surface of the cushion base 51 along the front-to-back direction of the cushion base 51. The connection frames 52 have a U-shaped cross section and are attached to the cushion base 51 so that their open sides lay opposite each other. Each swing arm 55 is installed between the outer surface of the corresponding connection frames 52 and the outer surface of the attaching wall 47 of the corresponding rotatively moving pedestal 45, via sprockets 56 and 57.

Specifically, axial holes 56A and 47A are drilled in the inner periphery of the sprocket 56 and the attaching wall 47, respectively. The sprocket 56 is welded to the outer surface of the attaching wall 47 with both axial holes 56A and 47A aligned with each other. A driving shaft (corresponding to a connection portion of the base member in accordance with the present invention) 60 penetrates the axial holes 56A and 47A. The swing arms 55 are relatively fixed at the laterally opposite axial ends of the driving shaft 60 (horizontal rotating shaft) penetrating the axial holes. An electric motor 67 described later drives the driving shaft 60, which is thus rotatively moved. This rotatively moves the swing arms 55 integrally with the driving shaft 60. The sprocket 56 is hereinafter referred to as a fixed sprocket.

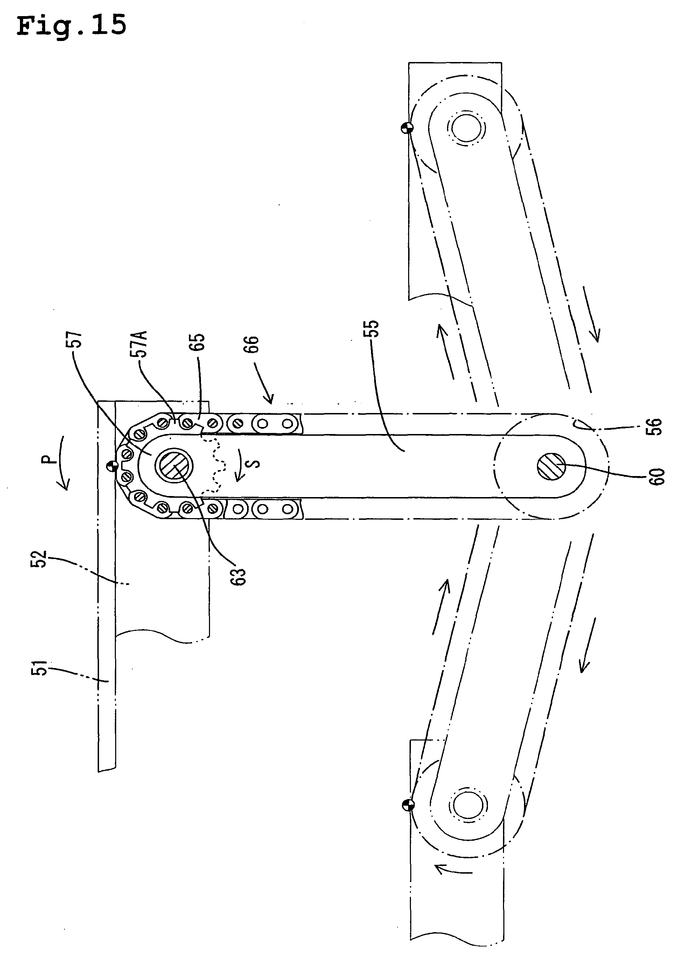

On the other hand, axial holes 52A are formed in the rear of the left and right connection frame 52 at opposite positions. A connection shaft (corresponding to a connection portion of the mount in accordance with the present invention) 63 penetrates the axial holes 52A. The sprockets 57 are idly inserted around the respective ends of the connection shaft 63. Moreover, a free end of the swing arm 55 is fixed to the connection shaft 63 outside each of the sprockets 57 (sprocket 57 is hereinafter referred to as the movable sprocket). Further, the movable sprockets 57 are screwed (clamped) to the connection frame 52 via a pair of bolts. Consequently, when the movable sprockets 57 rotate around the connection shaft 63, the connection frames 52 rotate integrally with the movable sprockets 57. Gear portions 56B and 57B are formed all along the outer peripheries of the fixed and movable sprockets 56 and 57, respectively. A chain (corresponding to a belt in accordance with the present invention) 65 is passed around the tooth portions 56B and 57B. As shown in Figures 4 and 15, the chain 65 is formed of annularly joined small links 66 that can be locked on the tooth portions 56B and 57B of the sprockets 56 and 57. Thus, as shown in Figure 15, when the swing arms 55 rotatively move in a P direction shown in the figure, the movable sprockets 57 rotatively move in the opposite direction, that is, an S direction. This serves to hold the cushion base 51 in a horizontal posture with respect to the car body regardless of the swinging operation of the swing arms 55. The fixed sprockets 56, movable sprockets 57, and chains 65 correspond to a posture holding mechanism in accordance with the present invention.

Now, description will be given of the electric motor 67 (driving portion) that drives the swinging portion 50. The electric motor 67 is installed on the sidewall 46 of the rotatively moving pedestal 45 via a joint bracket (not shown). A rotating shaft of the electric motor 67 is connected to the axial end of the driving shaft 60 for the swing arms 55 via a speed reduction gear 69. This allows the rotary motion of the electric motor 67 to be transmitted to the driving shaft 60 while the speed reduction gear 69 is decelerating the rotary motion. Further, in the present embodiment, a start switch is provided in, for example, the seat cushion 31 to operate a driving circuit for the electric motor 67. Thus, the switch is operated to drive or stop the electric motor 67.

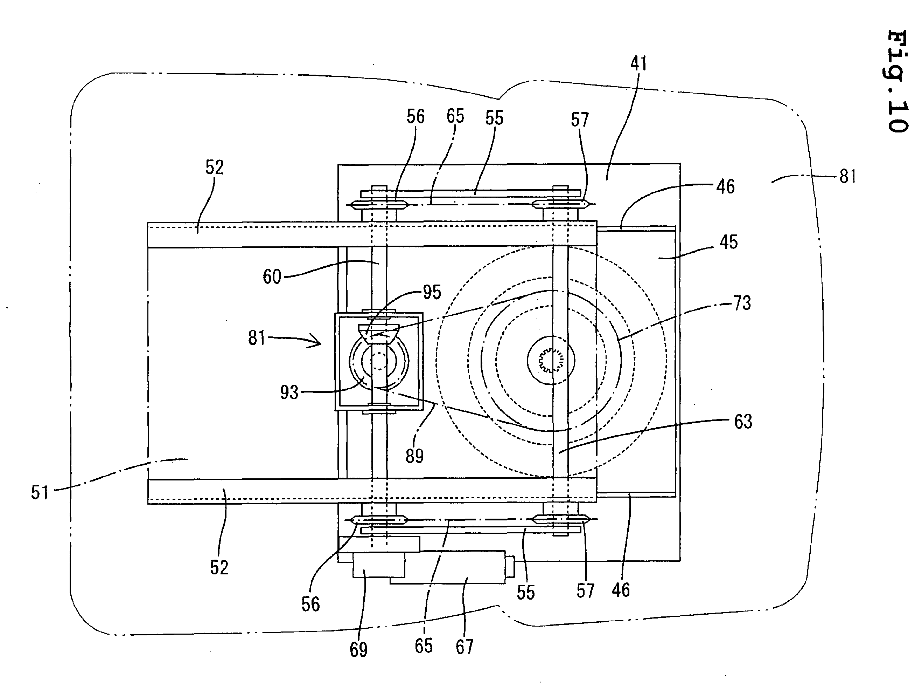

As described above, as shown in Figures 6 and 10, when the cushion base 51 is in the forward position, that is, above the rotatively moving pedestals 45, the swing arms 55 are diagonally connected (Z type) to the outer surfaces of the members 51 and 45. However, when the electric motor 67 is then driven to rotate the driving shaft 60, the swing arms 55 swing integrally with the driving shaft 60 tomove the cushion base 51 upward or downward and frontward or backward while maintaining the cushion base 51 in its horizontal posture as shown in Figure 15. Reference numerals 101 and 102 shown in Figure 4 denote bushes fitted around the driving shaft 60 and connection shaft 63, respectively. The bushes allow both shafts 60 and 63 to perform a smooth rotatively moving operation.

In the present embodiment, a linkmechanism is interposed between the swinging portion 50 and the rotatively moving portion 40 to combine the rotatively moving operation with the swinging operation.

In the present embodiment, the link mechanism is composed of a transmitting portion 71 and a converting portion 91. First, the converting portion 91 will be described.

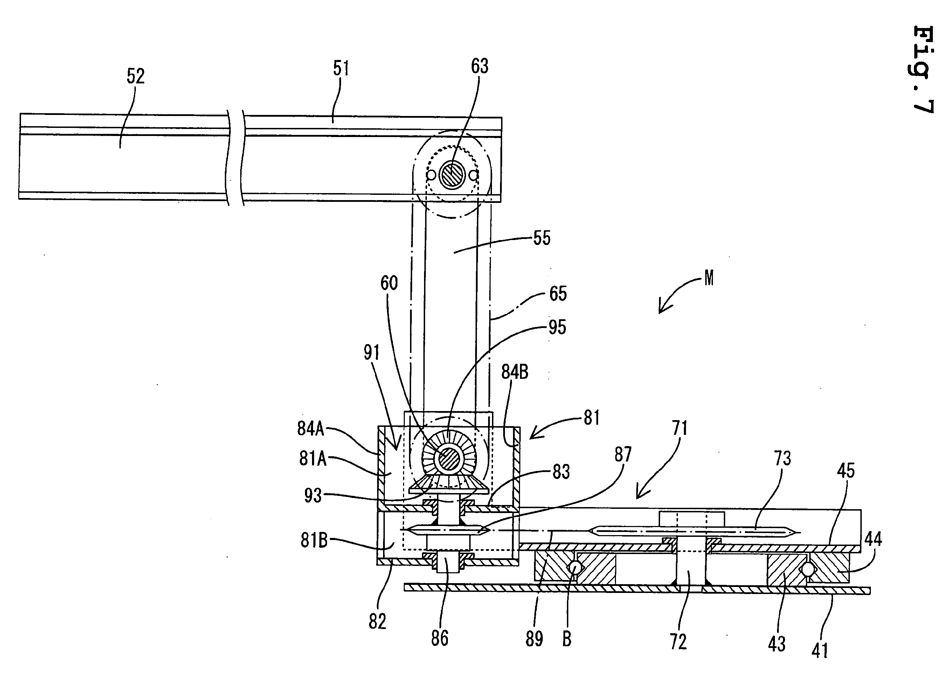

As shown in Figure 4, an attaching recess 45B is formed in a central portion of a front end of the rotatively moving pedestal 45. A box-shaped gear box 81 is attached to the attaching recess 45B. As shown in Figure 7, the gearbox 81 has a partitioning plate 83 above a bottom plate 82 to partition the interior of the gearbox 81 into an upper chamber 81A and a lower chamber 81B.

A relay pin 86 (vertical rotating shaft) is rotatively movably supported in the lower chamber 81B so that its axial end projects into the upper chamber 81A. A bevel gear 93 (vertical gear) is fixed to the part of the relay pin 86 which projects into the upper chamber 81A; the bevel gear 93 is provided with a tooth portion 93A on its top surface. On the other hand, a pair of bypass ports 85A is formed in a left and right lateral wall 85 of the upper chamber 81A of the gear box 81. The driving shaft 60 for the swing arms 55 is inserted through the bypass ports 85A. Moreover, a change gear 95 (horizontal gear) is installed on the driving shaft 60 so as to be rotatively movable integrally with the driving shaft 60; the change gear 95 is engageable with the bevel gear 93. The gears 93 and 95 engage with each other in the upper chamber 81A of the gearbox 81.

Thus, once the driving shaft 60 for the swing arms 55 rotatively moves, the engagement between the change gear 95 and the bevel gear 93 converts rotary motion around the driving shaft 60 (rotary motion around a horizontal axis) into rotary motion around the relay pin 86 (rotary motion around a vertical axis) (converting portion).

Further, as shown in Figure 4, a main pin 72 (rotating center axis) is welded to a part of the bearing plate 41 which constitutes a rotatively moving center of both outer and inner ring 43 and 44; the upper end of the main pin 72 projects from the bypass port 45A, formed in the rotatively moving pedestal 45. A large-diameter sprocket 73 is fitted around the tip of the main pin 72; a tooth portion 73A is formed around the outer periphery of the large-diameter sprocket 73. That is to say, an attaching hole for the main pin 72 is formed in the inner periphery of the large-diameter sprocket 73. Gear portions 72A and 73B are formed on an inner wall of the attaching hole and on an outer peripheral part of tip of the main pin 72. Thus, the engagement between the gear portions 72A and 73B prohibits the large-diameter sprocket 73 from performing a rotatively moving operation around the main pin 72.

On the other hand, a small-diameter sprocket 87 (rotating sprocket) is fitted around the outer periphery of the relay pin 86; the small-diameter sprocket 87 is rotatively movable integrally with the relay pin 86. Further, as shown in Figure 4, the small-diameter sprocket 87 and the large-diameter sprocket 73 have an almost equal height from the top surface of the rotatively moving pedestal 45. The lower chamber 81B of the gearbox 81 is not provided with a front wall 84A or a rear wall 84B but is open in a front-to-back direction. An annular chain 89 (belt) is passed between the small-diameter sprocket 87 and large-diameter sprocket 73 in the gearbox 81. Accordingly, when the small-diameter sprocket 87 rotates around the relay pin 86, the rotation is converted into a revolution around the main pin 72 via the chain 89. Since the small-diameter sprocket 87 is provided on the rotatively moving pedestal, the revolution rotatively moves the rotatively moving pedestal 45 around the main pin 72 (transmitting portion).

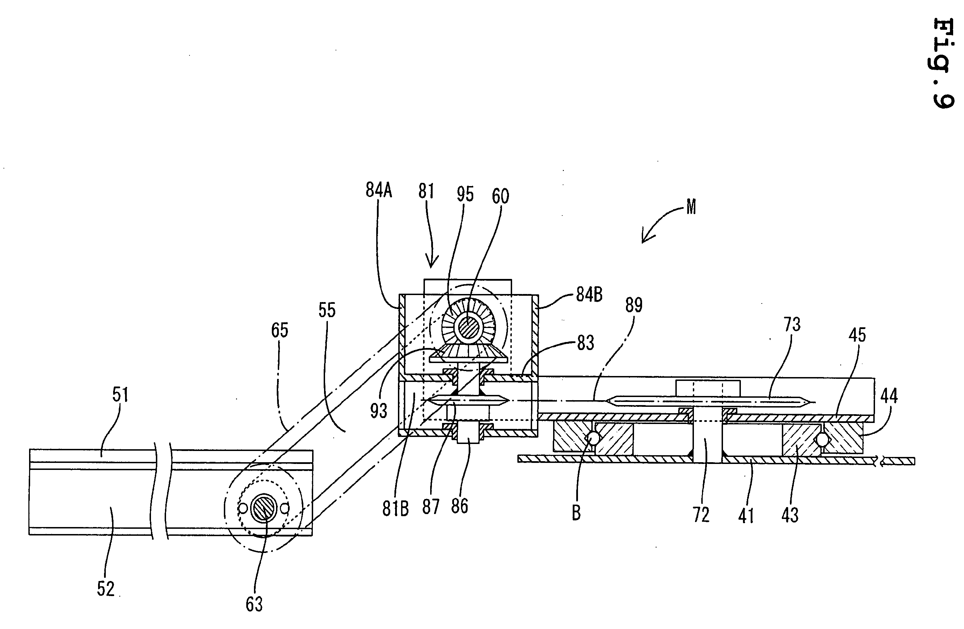

Thus, the rotatively moving operation of the rotatively moving pedestal 45 is combined with the swinging operation of the swing arm 55. In the loading and unloading position shown in Figures 3 and 9, each swing arm 55 position the rotatively moving pedestal 45 located inside the car and the cushion base 51 projecting out of the car so as to be positioned toward the exterior of the car.

Reference numeral 105 shown in Figure 4 denotes a bush that allows the relay pin 86 to perform a smooth rotatively moving operation.

Now, description will be given of a procedure for projecting the seat portion 30 out of the car.

First, the passenger first gets out of the car, while leaving the passenger 20 side door 14 open. The passenger subsequently turns on the switch to project the seat portion 30 out of the car. In other words, the switch is turned on to start driving the electric motor 67. This allows the rotary motion of the electric motor 67 to be transmitted to the driving shaft 60 while being decelerated via the speed reduction gear 69. The swing arms 55 are then rotatively moved integrally with the driving shaft 60. This causes the seat portion 30 to rise gradually from the forward position (position shown in Figure 1) while performing a turning operation (rotatively moving operation) described later.

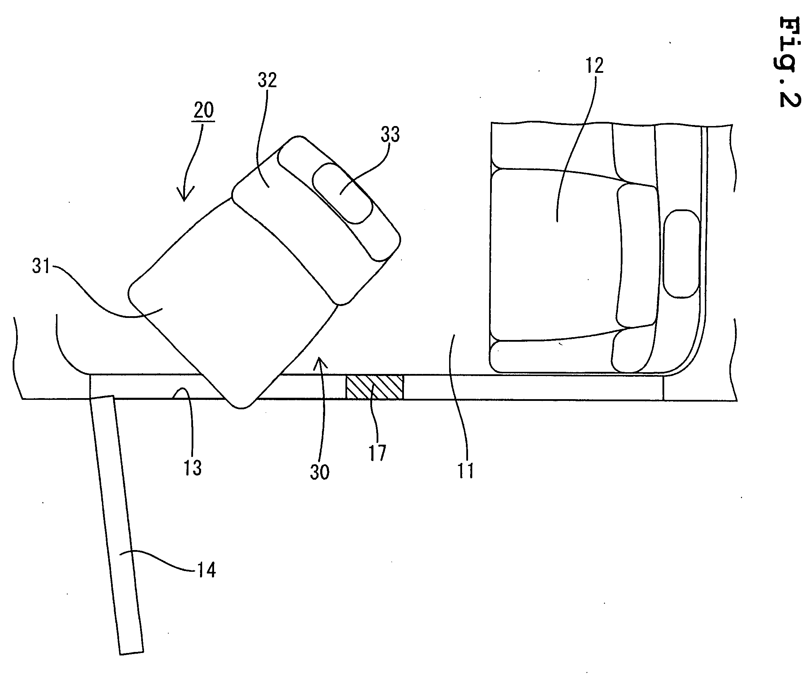

When the driving shaft 60 rotatively moves, the engagement between the change gear 95 and the bevel gear 93 allows the rotating motion around the driving shaft 60 to be transmitted to the relay pin 86. This causes the small-diameter sprocket 87 to rotate around the relay pin 86. When the small-diameter sprocket 87 rotates, the rotative motion is converted into a revolution around the main pin 72 via the chain 89 and large-diameter sprocket 73. This causes the outer ring 44, and thus the rotatively moving pedestal, 45torotatively move around the main pin 72. The seat portion 30 is thus turned toward the exterior of the car as shown in Figure 2.

Thus, once the switch is turned on to drive the electric motor 67, the seat portion 30 performs a combination of the swinging operation (vertical movement involving an operation of moving into or out of the car). The seat portion 30 continues to rise until the swing arms 55 are brought into an upright position as shown in Figure 7. The swing arms 55 subsequently pass beyond the upright position and tilt toward the exterior of the car. This causes the seat portion 30 to project out of the car while gradually lowering. In the present embodiment, the seat portion 30 passes through the door opening 14 almost simultaneously with the start of the lowering operation.

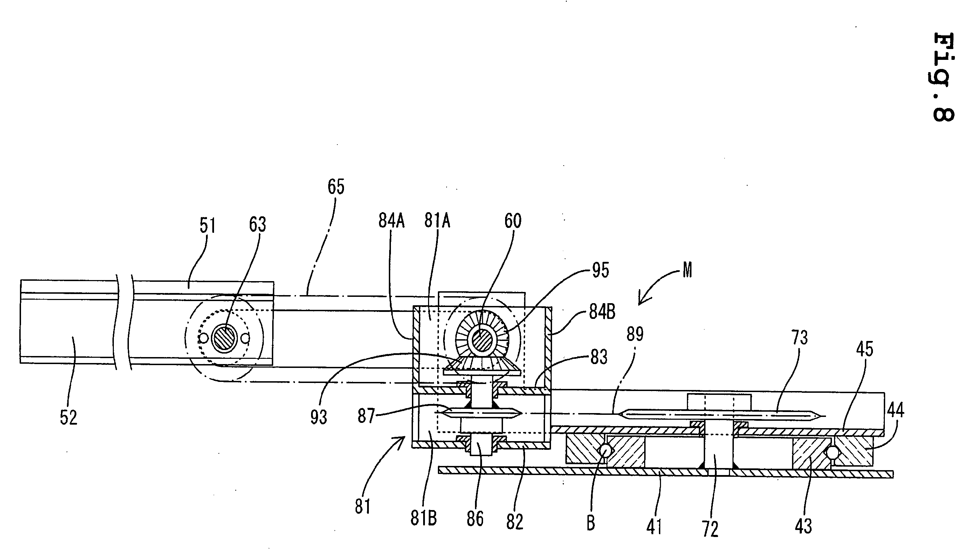

The swing arms 55 pass through a horizontal posture shown in Figure 8 and then further swings to lower the seat portion 30. Once the seat portion 30 pivots through about 90° from the previously described forward position and reaches a predetermined height from the ground surface (loading and unloading position), the driving of the electric motor 67 is stopped at that position.

Under these conditions, the swing arms 55 are hanging as shown in Figure 9. While the seat portion 30 is moving from the forward position to the loading and unloading position, the swing arms 55 swing through about 180° around the driving shaft 60. The swing arms 55 are thus set to almost invert from the interior to exterior of the car. This allows the seat portion 30 to move by a sufficient amount (stroke available when the seat portion swings to the interior or exterior of the car) in the front-to-back direction (in the present embodiment, the amount corresponds to almost double the length of the swing arm 55).

Further, as shown in Figure 3, when the projecting operation of seat portion 30 is completed, the seat cushion 31 projects out of the car. Thus, for example, with a wheelchair placed in parallel with the seat portion 30, the passenger can smoothly shift from the seat to the wheelchair. A retracting operation is reverse to the previously described operation; the retracting operation returns the seat portion 30 projecting out of the car, to the forward position in the car. Accordingly, duplicate descriptions are omitted.

Thus, according to the present embodiment, the rotatively moving pedestal 45 is provided in the area sandwiched between the opposite swing arms 55. This prevents the rotatively moving pedestal 45 from extending sideward. Further, in the frontward position, the swing arms 55 diagonally position the rotatively moving pedestal 45 and cushion base 51. This prevents the swing arms 55 from extending upward from the cushion base 51. Therefore, the size of the apparatus can be reduced across the width and height.

Further, a 4-node link consisting of four supporting points is used by a well-known configuration (posture holding portion) for holding the posture of the cushion base 51 during the swinging operation of the swing arm 55. However, the sprockets operate via two supporting points and thus have a simple configuration and operate smoothly.

Moreover, the link mechanism is interposed between the rotatively moving portion 40 and the swinging portion 50. A swinging operation of the swing arm 55 via the electric motor 67 rotatively moves the rotatively moving pedestal 45 in unison with the swinging operation. Thus, both swinging and rotatively moving operation can be achieved using the same driving source. This makes it possible to reduce the number of parts required and the size of the whole apparatus.

### <Other Embodiments>

The present invention is not limited to the embodiments described above with reference to the drawings. For example, embodiments described below are also included within the scope of the present invention. Many other variations may be made to the above embodiments without departing from the spirit of the present invention.
(1) The present embodiment interposes the link portion between the rotatively moving portion and the swinging portion. However, the link portion may be omitted and a dedicated driving source may be used for the rotatively moving portion.
   When the rotatively moving portion and swinging portion are thus independent of each other, only the swinging portion can be used to adjust the height of the seat (lifter function). To project the seat portion out of the car or retract it into the car, the pivoting operation of the rotatively moving portion may be combined with the projecting or retracting operation.
(2) The present embodiment applies the rotatively moving and swinging apparatus M to the passenger seat 20 in the vehicle. However, the rotatively moving and swinging apparatus M may be used for other applications, for example, a loading or unloading operation in an uneven place.
(3) The present embodiment fixes the sprockets 56 on the rotatively moving pedestal 45, while rotatively moving the sprockets 57 on the cushion base 51. However, this arrangement may be reversed.
(4) The present embodiment sets the swinging angle of the swing arms 55 at about 180°. However, the swing arms 55 may swing through a larger angle.

## Claims

1. A swinging apparatus **characterized by** comprising:
a base member;
a mount on which a load is placed;
a swing arm that, in a set position where the mount is disposed on the base member, diagonally positions the base member and mount, the swing arm swinging around a connection portion of the base member to move the mount upward or downward and forward or backward with respect to the base member; and
a posture holding portion that, during the swinging operation of the swing arm, rotatively moves the mount around a connection portion of the mount in a direction opposite to a rotatively moving direction of the swing arm to hold the mount in a horizontal posture.

2. The swinging apparatus according to claim 1, **characterized in that** the posture holding portion comprises a fixed sprocket fixed to one of the connection portions of the base member and mount, a movable sprocket rotatively movably supported by the other connection portion, and an annular belt that joins the fixed sprocket and the movable sprocket together.

3. The swinging apparatus according to claim 1 or 2, **characterized by** further comprising:
a rotatively moving portion comprising the base member and a bearing portion that rotatively movably supports the base member;
a swinging portion comprising a horizontal rotating shaft disposed so that an axis of the horizontal rotating shaft is horizontally directed with respect to the base member, and the swing arm attached to a shaft end of the horizontal rotating shaft and using the horizontal rotating shaft as a connection portion to the base member; and a driving portion that rotates the horizontal rotating shaft around an axis of the driving portion, and
in that a link mechanism is interposed between the rotatively moving portion and the swinging portion to link a swinging operation of the swing arm to a rotatively moving operation of the base member, and
the link mechanism comprises:
a transmitting portion comprising a vertical rotating shaft having an axis extending in a direction parallel to a direction in which a rotating center axis of the base member extends, the transmitting portion being able to transmit rotary motion around the vertical rotating shaft to the base member; and
a converting portion that converts the rotary motion around the horizontal rotating shaft into rotary motion around the vertical rotating shaft.

4. The swinging apparatus according to claim 3, **characterized in that** the converting portion comprises a horizontal gear fitted around the horizontal rotating shaft so as tobe rotatively movable integrally with the horizontal rotating shaft and a vertical gear supported around the vertical rotating shaft so as to be rotatively movable integrally with the vertical rotating shaft, the vertical gear being engageable with the horizontal gear, the vertical rotating shaft being provided in the base member.

5. The swinging apparatus according to claim 3 or 4, **characterized in that** the transmitting portion comprises a rotating sprocket fixed to the vertical rotating shaft so as to be rotatively movable integrally with the vertical rotating shaft, a fixed sprocket fixed to the rotating center shaft of the base member, and an annular belt that joins the rotating and fixed sprockets together.

6. The swinging apparatus according to any of claims 3 to 5, **characterized in that** the base member is attached to a floor panel of a car body, a seat portion in which a passenger can sit is connected to the mount, and the seat portion is projected out of or retracted into the vehicle while being turned from a forward position in which the seat portion is directed toward a front of the vehicle, to an opening in the vehicle, by means of a rotatively moving operation of the rotatively moving portion and a swinging operation of the swinging portion,
when the seat position is in the forward position, the swing arm diagonally positions the base member and the mount located above the base member but can be almost inverted around the horizontal rotating shaft, and
when the seat portion is in a loading and unloading position outside the vehicle, the swing arm positions the base member located inside the car and the mount projecting out of the car so as to hang toward the exterior of the car.
